# EUROPEAN PATENT SPECIFICATION

(11) **EP 3 331 694 B1**
(45) Date of publication and mention of the grant of the patent: **17.06.2020**
(21) Application number: 16814816.1
(22) Date of filing: 23.06.2016
(51) Int. Cl.: B32B 1/02, A61G 17/007, B32B 3/12, B32B 3/28, B32B 29/00, B65D 88/00, B65D 90/00, D21J 3/00, D21J 7/00, B32B 29/08

(54) **LARGE LIGHTWEIGHT MOLDED MATERIAL AND METHOD FOR ITS MANUFACTURE**
GROSSES LEICHTGEWICHTIGES GEFORMTES MATERIAL UND VERFAHREN ZUR HERSTELLUNG DAVON
GRAND MATÉRIAU MOULÉ DE FAIBLE POIDS ET PROCÉDÉ DESTINÉ À SA FABRICATION

(30) Priority: 23.06.2015 SE 1550866
(43) Date of publication of application: 13.06.2018
(73) Proprietor: OrganoClick AB, 187 66 TÄBY (SE)
(72) Inventor: SUNDBLAD, Per, 412 66 Göteborg (SE); HANSSON, Torbjörn, 186 94 Vallentuna (SE); OLLEVIK, Tommy, 141 70 Segeltorp (SE); HELLBERG, Mårten, 114 45 Stockholm (SE)
(74) Representative: Theander, Anna Katarina Henrietta
(86) International application number: PCT/SE2016/050624
(87) International publication number: WO 2016/209155

(56) References cited:
- EP-A1- 0 466 653
- EP-A1- 1 197 596
- DE-A1- 19 922 785
- GB-A- 2 448 592
- US-A- 2 518 164
- US-A- 4 162 935
- US-A- 5 771 549
- DATABASE WPI Week 200776 Thomson Scientific, London, GB; AN 2007-805856 XP002789575, -& CN 1 827 485 A (LI S) 6 September 2006 (2006-09-06)
- Anonymous: "Re-board, Boundless Imagination with Reboard", Re-board Technology , 8 March 2019 (2019-03-08), XP002789576, Retrieved from the Internet: URL:https://reboard.se/re-board/ [retrieved on 2019-03-08]

## Description

### TECHNICAL FIELD

Generally, embodiments herein relate to large lightweight molded materials, and to the method of making such molded materials.

More specifically, different embodiments of the application relate inter alia to different 3-D shaped lightweight material made by using spacer lined materials.

### BACKGROUND

Pulp molding is known in the art for producing small packages such as egg cartons, disposable food dishes, box inserts and other protective packing materials etc.

### RELATED ART

CN1827485 A relates to a pulp molding injection material which can replace the beehive paper and ESP foaming plastic as the packing matter or packing stuff. The disclosure has a simple method and the application for variable shapes. Said paper hollow beehive packed product via slip casting method or upper-and-lower switching mould is adsorbed by pulp mould to be integrated, which is formed by pulp plane adsorption layer and several tube-hole supports. The disclosure has better strength and baffle properties, with simple process, high quality, stable structure, variable shapes and lower cost.

US2518164 discloses a product formed of sheet material, and a process and apparatus for producing said product. The known product is an assemblage of sheets of a non-planiform character, having elevations and depressions in each sheet ,and bonded together in sandwhich form.

"Re-board",Retrieved from the Internet <https:// reboard.se/re-board/ > [retrieved on 2019-03-08] discloses Re-board®, a strong and versatile rigid paperboard. Its engineered fluted core allows Re-board® to be cut and folded into any shape imaginable. The pristine white surface can be digitally printed or beautifully finished with laminates. Even when crafted in fantastical shapes, Re-board® remains exceptionally strong, lightweight, and durable.

US4162935 discloses a coffin for a human being molded of papier-mache. The coffin is formed with ribs that provide strength to the structure and at the same time have a decorative effect. The method of forming the coffin includes drawing paper pulp onto the molds while the latter are inverted so that there is a heavy flow of pulp by gravity to the open end of the coffin to produce heavier flanges. When the mold is received from the pulp with the coffin molded onto it, an air impervious blanket is placed over the coffin when the vacuum is applied to suction the water from the papier-mache so that greater compression of the pulp is obtained to produce a stronger papier-mache structure and reduce the drying time.

DE19922785 relates to the production of a paper coffin, for use in a crematorium. The paper material is of recycled used paper, together with additives. The paper is shaped into a box and a lid by vacuum shape drawing, to give the main body of the coffin. The box and lid are dried. The walls of the box and lid are pressed to solidify them, in an integrated stage which shapes the box with solid walls. The outer surfaces are treated, such as by painting, to give sealed outer surfaces. The interior of the box is lined with the required furnishings. During the pressing stage, a pattern can be embossed on the walls of the box and lid using patterned and profiled press dies. The patterning can be of raised and depressed zones. The recycled used paper material is prepared by crushing, threshing, hydrolyzing, degrading and/or reduction to fibers. The press unit has press and/or embossing plates.

EP0466653 provides a coffin made of moulded pulp and comprising a bottom part and a top part. The halves of the coffin can also be identical and are each formed in a single operation as a moulding in a positive mould of a moulding press. They are moulded in such a way that reinforcements are provided in the corners of the bottom and top parts and in the region of the handles. The hydraulic moulding press, which can operate with a pressure of 2000 t, comprises a moveable ram and a fixed die, which is designed as a core made permeable by openings. The perforated die forms an inverted coffin half, the downwardly open coffin half being sealed off by a sealing plate. A vacuum for dewatering the pulp suspension and a positive pressure for releasing the moulding from the mould can be produced in the cavity of the core and thus via openings in the positive mould via a suction- air or compressed-air line. The water-resistant binder contained in the pulp can be activated either during a subsequent heat treatment or during the moulding process itself, the required final strength of the coffin thereby being guaranteed.

GB2448592 discloses a coffin or casket, substantially made of inexpensive, recycled and/ or biodegradable material such as paper-pulp based materials such as cardboard and fibreboard. The coffin comprises a plurality of panels each including a sandwich honeycomb layer comprising honeycomb cells and liner boards on both sides thereof as well as an outer layer in the form of a veneer, which may comprise wood or a wood-effect material. The honeycomb board may be built up in certain areas with cardboard layers which are framed within strips or beading to provide a traditional coffin appearance with panels and mouldings. One or more areas of the panels are adapted for the attachment of coffin furniture thereto by the provision of a block of material inset into the honeycomb layer.

US5771549 discloses a casket shell comprises an elongated inner box and an elongated outer box. The inner box is congruently disposed in the interior region of the outer box and a core is sandwiched between the inner and outer boxes. The core includes a top surface attached to the inner box and a bottom surface attached to the outer box. The core can be made form a closed-celled material or a honeycomb material having a plurality of interconnected cylinders. Both inner and outer boxes are foldable to a generally planar configuration to minimize the volume during shipment. A casket shell in accordance with the present invention can also include a plurality of panels, each panel includes a core having a top surface and a bottom surface, first and second stabilizing surface element attached to the bottom and top surfaces, respectively. The panels connected together by a plurality of connectors to define the casket shell.

EP 1 197 596 disloses a papermaking mold for producing a pulp molded article comprising a core of prescribed shape which has a plurality of holes for fluid passage interconnecting the outside and the inside and is made of an elastically deformable material and a fluid-permeable material which covers the outer surface of the core, the fluid-permeable material being capable of forming passages for a fluid in its thickness direction even when pressed and deformed.

US 6 245 199 describes a method of pulp molding trays where the starting material is a suspension containing cellulose fibers. The male mold half is dipped in a bath of the suspension, and the mold halves are then pressed together under heat and pressure.

SE 529 897 C2 describes the pulp molding of a tray where a dewatering receptacle is used to shape a tray of pulp which is then transferred to a compression tool where the tray is subjected to pressure and heat. It involves a transfer step and is not readily usable for large containers.

EP 0466653 describes a coffin made of molded pulp without any reinforcing spacer lining.

WO06016072 describes a large container, in this case a coffin made up of panels consisting of honeycomb layers with paper sheet faces.

However, none of the related art discloses or hints at how to achieve the solutions provided by embodiments herein.

### OBJECT OF THE INVENTION

Embodiments herein intends to solve a complex of difficult-to-reconcile interrelated problems still present in the designs of the prior art:
It has been very difficult to use existing pulp molding methods to produce very large three dimensional objects. This is due partially to the problem of thermal expansion and contraction of the two metal mold halves used in the compression of the pulp in the press. If the dimensions of the mold halves change, due to unavoidably becoming cooler and hotter during the compression process, the strength of the container will be compromised and the surface will not be smooth and even. This is not a problem if the surface quality and the strength of the finished object is of no great importance, such as for packaging materials or disposable dishes, but where the strength and surface finish of the finished molded product is of great importance then this is a problem. In general it is difficult to achieve uniformity of strength and surface in pulp molded products, particularly in such products which are thin.

It is now possible to make a large volume lightweight shell of molded pulp with improved strength and smoothness using the mold halves and apparatus described and claimed in our co-pending Swedish patent application No. 1550864-1, entitled Pulp Molding Apparatus and Molds for Use Therein.

Providing a large pulp molded 3-D shaped material, which is lightweight, very strong, with smooth and even outer surface and above all is easy and inexpensive to manufacture has hitherto proved very difficult.

### SUMMARY

This entire complex of problems listed above finds its solution in embodiments herein as defined in the appended main patent claims.

In a first aspect, a large lightweight three dimensional molded material comprising an outer shell of molded pulp and a reinforcing spacer conforming to and adhering to the interior of the shell and an inner shell made of molded pulp or a flexible paper based material adhering to the spacer liner is provided.

In embodiments, the spacer may be a honeycomb sheet of hexagonal cells.

In embodiments, the reinforcing spacer and the inner shell may be made of a Re-board® with a single cover paper sheet.

In embodiments, the Re-board® spacer may have only a single interior cover sheet.

In embodiments, the reinforcing spacer liner may comprise hollow cells separated by walls substantially perpendicular to the shell.

In embodiments, the reinforcing spacer may comprise a honeycomb structure made of paper.

In embodiments, the reinforcing spacer may be made of a spacer structure made of molded pulp.

In embodiments, the parts made of molded pulp may have been made with functional additives such as fire-retardants, hydrophobization additives, dry strength additives and/or a wet strength additives.

In embodiments, a material cover may also comprise an outer shell of molded pulp and a reinforcing spacer liner.

In embodiments, the material may have a length of at least 1 m.

In another aspect, a method of producing a molded 3-D shaped material is provided. The method comprises
a. Pressing a water based pulp slurry between a first male mold half covered with elastomeric material and a second female mold half, and drying the material at elevated temperature under pressure, to form the molded pulp shell,
b. providing a core spacer structure and gluing the reinforcing spacer structure to the interior of the molded pulp shell.
c. provide an inner shell made of molded pulp or another flexible paper based material and gluing it to the core spacer structure.

In embodiments, the pressing may be effected in a frame in which one of the mold halves is mounted in means for translational movement towards the other mold half, by means for compressing and holding the pair of mold halves fitted against each other and a bath of pulp slurry, and the means for translational movement may be adapted for immersing a first mold half in the bath of pulp slurry and moving the first mold half into fitting compression against the second mold half.

In yet another aspect, a large lightweight three dimensional object is provided. The object comprises a curved outer shell of molded pulp and a reinforcing flexible spacer conforming to and adhering to the interior of the shell and an inner shell made of molded pulp or a flexible paper based material adhering to the spacer liner.

In embodiments, the reinforcing flexible spacer may be a honeycomb sheet of hexagonal cells.

In embodiments, the reinforcing flexible spacer may be a corrugated core structure.

In embodiments, the reinforcing flexible spacer and the inner shell may be made of a Re-board® fluted paperboard with a single cover paper sheet.

In embodiments, the Re-board® flexible spacer may have only a single interior cover sheet.

In embodiments, the reinforcing spacer liner may comprise hollow cells separated by walls substantially perpendicular to the shell.

In embodiments, the reinforcing flexible spacer may comprise a honeycomb structure made of paper.

In embodiments, the reinforcing flexible spacer may be made of a spacer structure made of molded pulp.

In embodiments, the parts made of molded pulp may have been made with functional additives such as fire-retardants, hydrophobization additives, dry strength additives and/or a wet strength additives.

In embodiments, the object may have a length of at least 1 m.

In another aspect, a method of producing a molded 3-D shaped object is provided. The method comprises
a. Pressing a water based pulp slurry between a first male metal mold half spray coated or cast with elastomeric material and a second female metal mold half, and drying the pulp slurry at elevated temperature under pressure, to form the curved molded pulp shell,
b. providing a core spacer structure and gluing the reinforcing spacer structure to the interior of the molded curved pulp shell.
c. providing an inner shell made of molded pulp or another flexible paper based material and gluing it to the core spacer structure.

In embodiments, steps b and c are carried out by gluing one-faced Re-board® to the interior of the curved molded pulp shell.

In embodiments, a single sheet of one-faced Re-board® may be glued to the entire interior of the curved molded pulp shell.

In embodiments, the pressing may be effected in a frame in which one of the mold halves is mounted in means for translational movement towards the other mold half, by means for compressing and holding the pair of mold halves fitted against each other and a bath of pulp slurry, and the means for translational movement may be adapted for immersing a first mold half in the bath of pulp slurry and moving the first mold half into fitting compression against the second mold half.

### BRIEF DESCRIPTION OF DRAWINGS

Embodiments herein will now be described in more detail with reference to the appended drawings, wherein:
Fig. 1 shows a cross sectional view of a container made of a light-weight material according to embodiments herein.
Fig. 2 shows a perspective view of the light-weight container shown in Fig. 1.
Fig. 3 shows schematically the pair of mold halves used in a method which can be used to manufacture the shell for a material according to embodiments herein.
Figs. 4a-f show a frame which can be used with such mold halves to manufacture a shell for a material according to embodiments herein.

### DETAILED DESCRIPTION

The large lightweight 3-D shaped pulp molded material, for example an object, according to embodiments herein is shown in the form of a container in cross section in Fig. 1 and in perspective in Fig. 2. The lightweight exemplary container in the material according to embodiments herein is built up as a sandwich construction by three different parts comprising:
i) An outer shell 17 made of 3-D shaped molded pulp [by for example, using the novel method for producing large molded pulp objects described in our co-pending Swedish Patent Application No. 1550864-1, entitled Pulp Molding Apparatus and Molds for Use Therein]. This is the surface of the material and will have a smooth and even surface and make possible complex 3-D shaped designs.
ii) A core 18 composed of a flexible spacer structure that may but is not limited to a core of Re-board®, a paper honeycomb structure, a molded core structure (as described in e.g. International Patent Application No. WO2010138066 A1), or the corrugated core structure made by fluting used in corrugated boards.
iii) An inner shell 19 made of molded pulp or a flexible paper based material such as a linerboard or paperboard.

By using a sandwich construction as described above, complex 3D-shaped designs may be utilized in the material while at the same time obtain a high strength material.

In one of the embodiments herein, a shell 17 is made of molded pulp and is lined in the embodiment shown with Re-board® with only a single linerboard, on its exposed interior surface. The Re-board® then composes both the core structure (ii) above) and the inner shell (iii) above). As one of the linerboards has been removed from a normal reboard material, the Re-board® 18 can be bent, without breaking, to conform to the inside of the molded pulp shell 17 before being glued to the shell, which will then replace the missing linerboard of the reinforcing Re-board® spacer structure.

It is of course also possible to use other core materials used as spacer materials to line the molded pulp shell 17 that are able to conform to the interior curvature of the molded pulp shell. A honeycomb structure, having walls extending perpendicular to the surface of the shell 17 is also one possible spacer material, as well as the corrugated core used in corrugated board, or pulp molded spacer material as described above, thereafter covered with another inner shell made of molded pulp of a paper-based material in order to create a strong lightweight material.

In order to improve the properties further of the material, various functional additives may be used when producing the molded parts of the material. Additives that may be used in order to increase the functionality of the material may be fire retardants, hydrophobization additives, dry strength additives and wet strength additives. This may be added in the pulp slurry used to make the molded material or object or may be added as a surface treatment by e.g. spraying or coating.

The molded 3-D shaped material is characterized by having an even and smooth surface and good mechanical properties. The density of the molded materials needs to be at least 100 kg / m³ in order to obtain proper stiffness but may be even higher depending on the pressure used during the molding process.

The molded material or object may be made of pulp from various fibers such as virgin wood fibers (e.g chemothermo-mechanical pulp, chemical pulp or mechanical pulp), recycled wood fibers, textile fibers made of viscose, cotton or other cellulosic fibers, but may also be made of pulp comprising fibers mixed with thermoplastic fibers such as polylactic acid (as described in e.g. patent no EP2171154 A1) in order to create composite materials.

An apparatus is shown in Fig. 4 which can be used to make the molded pulp shell to form the container according to embodiments herein, and is described in our co-pending Swedish patent application No. 1550864-1, entitled Pulp Molding Apparatus and Molds for Use Therein.

It comprises a frame 1, holding a stationary platform holding a female mold half 3 and below it a movable platform 12 holding a male mold half 5.

Six synchronously motor driven nuts on six long screw rods 4 move the male mold half 5 from the slurry bath 16 (99.5 % water and 0.5% pulp fibers at 25-30 degrees C) to engagement in the female mold half 3, which is heated.

Fig. 3 shows in longitudinal cutaway view a pair of mold halves 3, 5 used for manufacturing shells 17 for the reinforced containers of embodiments herein. The male mold half 5 is made of hollow aluminum and is coated with an elastomer 6 which is ca 30 mm thick. This elastomer is preferably sprayed onto the aluminum mold half. It is also possible to cast the elastomer onto the aluminum mold half. A typical elastomer should be hydrophobic but not be subject to hydrolysis. An advantageous hardness, particularly for a sprayed on elastomer is 70 A-Shore, to provide optimal elastic properties. 5 mm diameter through-holes spaced 15 mm from each other cover the elastomer layer and connect to through-holes 8 in the aluminum body of the male mold half 5. Within the male mold half there is generated a vacuum of 0.5-0.9 bar. On top of the elastomer layer there is a wire mesh. In this case it is a 100 mesh (i.e. 100 threads per inch) and is approximately 1 mm thick. The wire mesh can also be laid in multiple layers which will further contribute to distributing the vacuum forces more evenly. The female mold-half 3 is made of aluminum and has in this example a weight of 700 kg. It is heated to ca. 200 degrees C., for example by means of heating rods embedded in the material of the female mold-half 3. This is the most energy effective method of heating the female mold-half. Its inner surface will create the outer surface of the product. The two mold halves, or parts of the mold halves such as an insert, can be made of porous aluminum to increase strength over sintered material and to increase heat conductivity. The male mold-half 5 after being dipped in the slurry bath 6 (see Fig. 4a) dewaters the slurry through vacuum to approximately 20% dryness (80% water) and the male mold-half 5 is then pressed into the female mold-half 3 down to a gap of ca. 1 mm between the two mold halves. It can vary for this particular product between ca. 0.8 and ca. 1.2 mm without detrimental effects. The material is then dried under pressure at an elevated temperature (>100 degrees, preferably 150 degrees). Due to absorbing coolness from the male mold-half 3 (temp of ca. 25°C), the hot aluminum female mold-half 5 (initially ca. 200° C) will in turn drop ca. 13 degrees C during the compression process. This temperature change causes the female mold-half to shrink over its length approximately 7-8 mm with corresponding contractions in its width (2.5 mm) and height (1.5 mm). This is compensated for by the elastomer layer 6. The temperatures in both the female and male mold-halves will vary up and down during the compression process thus repeatedly changing slightly the dimensions on the molds. In conventional pulp molding processes, these dimensional variations would cause stresses and unevenness in the finished product, possibly even ruptures. In this particular exemplary product, without an elastomer layer, the temperature of the female mold-half must be rather precise, i.e. in this example between ca. 195° and 204° C. This precision is difficult to achieve and maintain in an industrial process of this type. These problems have been experienced even in the manufacture of relatively small pulp molded products, and require precise adjustment of the temperature to avoid them. Most pulp molded products, such as egg cartons, are several millimeters thick and are thus more porous and it makes no difference whether such products have a rough surface. A product with a rough surface cannot be used in many applications. For a large product, the problems of dimensional heat expansion/contraction will be greatly increased. These problems have hitherto made it impossible to manufacture large pulp molded products with reasonable reject rates and with a smooth surface.

Embodiments herein was developed in order to produce shells for large containers with very few rejects and no necessity of precisely monitoring and continually adjusting the temperatures of the two mold-halves. Since the elastomer is used to absorb much of the dimensional variation of the male and female mold-halves, they can be made much lighter and thinner than otherwise since they will not require a large mass to prevent temperature variations. For instance in this example the female mold-half weighs ca. 750 kg. If it had to maintain a more constant temperature it might have to have a mass of several tons, requiring more energy to heat such a large mass and maintain the heat.

For example, a casket has in general curved sides, something which is expensive to produce in plywood or with wood planks. According to embodiments herein it is possible to produce shells of ca. 1-2 mm in thickness, which provides the maximum stiffness. Thicknesses greater or less than this thickness (1-2 mm) provide less stiffness.

These problems are solved by coating the surface of the male mold-half with an elastomeric material, onto which the wire mesh or meshes is/are then applied. This elastomeric material continually compensates for the varying dimensions of the two mold-halves during the compression/heating process.

It is also advantageous for molding the shell to mount the stationary mold half (in this case the female mold half) to be slightly horizontally moveable (+- 25 mm) to make sure that any heating expansion will not prevent a correct horizontal alignment between the male and female mold halves during the pressing operation.

It is also advantageous to equip the pulp molding apparatus with mechanical jacks, combined with a more incremental final stage for the compression step. This final stage can also be accomplished with the aid of hydraulic pistons.

As can be seen in Fig. 3, the male mold half 5 is provided with channels 14 and large holes 8 beneath the elastomer layer 6 in order to prevent any reduction of the vacuum which holds the pulp slurry and dewaters it on the surface of the wire mesh.

Other embodiments herein further describes a method to produce the 3-D shaped molded lightweight material described above. The steps to produce the material comprises:
i) Provide a 3-D shaped molded material 17, or object, with the apparatus described above with or without addition of functional additives used as outer shell in the sandwich material
ii) Provide a spacer material 18 used as core in the sandwich material, and glue said core spacer material to the 3-D shaped molded material or object
iii) Provide an inner shell 19 made of a 3-D shaped molded material or object or a flexible paper based material which will adhere to the spacer material.

The manner of providing the three dimensional molded material or object will now be described with reference to the figures and in particular to Figs. 4a-4f. One apparatus for achieving this for comprises a frame 1, holding a stationary platform 2 on which is mounted a female mold half 3 and below it a movable platform 12 holding a male mold half 5. Figs. 4a, 4b and 4f show the apparatus in its mold-separated position and Figs. 4c, 4d and 4e show the apparatus its mold-compressed positon for forming the molded pulp shell. The same reference numerals for the same components are used throughout all of the drawings. The apparatus is shown in Fig. 4a in perspective view in the mold-separated position with the male mold half 5 submerged in a slurry bath 16. The liquid slurry itself is not shown in the figure. This same mold-separated position is shown in vertical section in Fig. 4b.

The male mold half 5 is submerged in a pulp slurry bath 16 (99.5 % water and 0.5% pulp fibers at 25-30 degrees C) and a suction system 17 is connected to the hollow interior cavity 15 of the male mold, whereby a coating of pulp slurry is sucked onto the surface of the male mold half 5.

Six synchronously motor driven nuts on six long screw rods 4 move the male mold half 5 from the slurry bath 16 into pressure engagement with the female mold half 3, which is heated, in the compression position of the molds shown in Figs. 4c, 4d and 4e.

The large molded material or object of embodiments herein may be of any size. The method of embodiments herein is in particular of use when the material has a size larger than what can be made with conventional molding technology. The 3-D molded material or object of embodiments herein may for example have a length of 1 m or longer or in another example a diameter of 1 m or bigger.

## Claims

1. A large lightweight three dimensional curved material comprising:
An outer shell (17) of molded slurried pulp and a flexible reinforcing spacer (18) conforming to and adhering to the interior of said shell and an inner shell made of molded pulp or a flexible paper based material adhering to said spacer liner.

2. Material according to Claim 1, **characterized in that** the said spacer is a honeycomb sheet of hexagonal cells.

3. Material according to Claim 1, **characterized in that** said reinforcing spacer liner comprises hollow cells separated by walls substantially perpendicular to said shell.

4. Material according to Claim 1, **characterized in that** said reinforcing spacer comprises a honeycomb structure made of paper.

5. Material according to Claim 1, **characterized in that** said reinforcing spacer is made of a spacer structure made of molded pulp.

6. Material according to Claim 1, **characterized in that** said parts made of molded pulp have been made with functional additives such as fire-retardants, hydrophobization additives, dry strength additives and/or a wet strength additives.

7. Material according to Claim 1 **characterized by** a cover also comprising an outer shell of molded pulp and a reinforcing spacer liner.

8. Material according to any of the preceding claims in which the material has a length of at least 1 m.

9. Material according to claim 1 **characterized in that** it is a large lightweight three dimensional object.

10. Material according to Claim 9, **characterized in that** the said reinforcing flexible spacer is a honeycomb sheet of hexagonal cells.

11. Material according to Claim 9, **characterized in that** said reinforcing flexible spacer is a corrugated core structure

12. Material according to Claim 9, **characterized in that** said reinforcing spacer liner comprises hollow cells separated by walls substantially perpendicular to said shell.

13. Material according to Claim 9, **characterized in that** said reinforcing flexible spacer comprises a honeycomb structure made of paper.

14. Material according to Claim 9, **characterized in that** said reinforcing flexible spacer is made of a spacer structure made of molded pulp.

15. Material according to Claim 9, **characterized in that** said parts made of molded pulp have been made with functional additives such as fire-retardants, hydrophobization additives, dry strength additives and/or a wet strength additives.

16. Material according to any of claims 9-15 in which the object has a length of at least 1 m.

17. Method of producing a molded 3-D shaped material according to any one of Claims 1-18, **characterized by**:
a. Pressing a water based pulp slurry between a first male metal mold half (5) spray coated or cast with elastomeric material (6) and a second female metal mold half (3), and drying the pulp slurry at elevated temperature under pressure, to form a curved molded pulp shell (17),
b. providing a core spacer structure and gluing said reinforcing spacer structure (18) to the interior of said molded curved pulp shell (17).
c. providing an inner shell made of molded pulp or another flexible paper based material and gluing it to the core spacer structure.

18. Method according Claim 17, **characterized in that** said pressing is effected in a frame (1) in which one of said mold halves (5) is mounted in means for translational movement towards the other mold half, means for compressing and holding said pair (3,5) of mold halves fitted against each other and a bath (10) of pulp slurry, and **in that** said means for translational movement is adapted for immersing a first mold half in said bath of pulp slurry and moving said first mold half into fitting compression against said second mold half.

19. Method according Claim 17 or 18, **characterized in that** said pressing is effected in a frame (1) in which one of said mold halves (5) is mounted in means for translational movement towards the other mold half, means for compressing and holding said pair (3,5) of mold halves fitted against each other and a bath (10) of pulp slurry, and **in that** said means for translational movement is adapted for immersing a first mold half in said bath of pulp slurry and moving said first mold half into fitting compression against said second mold half.

## Patentansprüche

1. Ein großes leichtgewichtiges dreidimensionales bogenförmiges Material, umfassend:
eine äußere Hülle (17) aus geformtem aufgeschlämmtem Zellstoff und einem flexiblen verstärkenden Abstandshalter (18), übereinstimmend mit und anhaftend an dem Inneren der Hülle, und eine innere Hülle, hergestellt aus geformtem Zellstoff oder einem flexiblen auf Papier basierenden Material, das an dem Abstandshalterfutter anhaftet.

2. Material nach Anspruch 1, **gekennzeichnet dadurch, dass** der Abstandshalter eine Wabenplatte aus sechseckigen Zellen ist.

3. Material nach Anspruch 1, **gekennzeichnet dadurch, dass** der verstärkende Abstandshalter hohle Zellen umfasst, die durch Wände im Wesentlichen senkrecht zu der Hülle getrennt sind.

4. Material nach Anspruch 1, **gekennzeichnet dadurch, dass** der verstärkende Abstandshalter eine Wabenstruktur umfasst, die aus Papier hergestellt ist.

5. Formmaterial nach Anspruch 1, **gekennzeichnet dadurch, dass** der verstärkende Abstandshalter aus einer Abstandshalterstruktur hergestellt ist, die aus geformtem Zellstoff hergestellt ist.

6. Material nach Anspruch 1, **gekennzeichnet dadurch, dass** die Teile, die aus geformtem Zellstoff hergestellt sind, mit funktionellen Additiven wie z.B. Feuer-Hemmmitteln, Hydrophobierungsadditiven, Trockenfestigkeitsadditiven und / oder Nassfestigkeitsadditiven hergestellt wurden.

7. Material nach Anspruch 1, **gekennzeichnet durch** eine Abdeckung, die auch eine äußere Hülle aus geformtem Zellstoff und ein verstärkendes Abstandshalterfutter umfasst.

8. Material nach einem der vorhergehenden Ansprüche, wobei das Material eine Länge von wenigstens 1 m aufweist.

9. Material nach Anspruch 1, **gekennzeichnet dadurch, dass** es ein großer leichtgewichtiger dreidimensionaler Gegenstand ist.

10. Material nach Anspruch 9, **gekennzeichnet dadurch, dass** der verstärkende flexible Abstandshalter eine Wabenplatte aus sechseckigen Zellen ist.

11. Material nach Anspruch 9, **gekennzeichnet dadurch, dass** der verstärkende flexible Abstandshalter eine gewellte Kernstruktur ist.

12. Material nach Anspruch 9, **gekennzeichnet dadurch, dass** das verstärkende Abstandshalterfutter hohle Zellen umfasst, die durch Wände im Wesentlichen senkrecht zu der Hülle getrennt sind.

13. Material nach Anspruch 9, **gekennzeichnet dadurch, dass** der verstärkende flexible Abstandshalter eine Wabenstruktur umfasst, die aus Papier hergestellt ist.

14. Material nach Anspruch 9, **gekennzeichnet dadurch, dass** der verstärkende flexible Abstandshalter aus einer Wabenstruktur hergestellt ist, die aus geformtem Zellstoff hergestellt ist.

15. Material nach Anspruch 9, **gekennzeichnet dadurch, dass** die Teile, die aus geformtem Zellstoff hergestellt sind, mit funktionellen Additiven wie z.B. Feuer-Hemmmitteln, Hydrophobierungsadditiven, Trockenfestigkeitsadditiven und / oder Nassfestigkeitsadditiven hergestellt wurden.

16. Material nach einem der Ansprüche 9-15, wobei der Gegenstand eine Länge von wenigstens 1 m aufweist.

17. Verfahren zum Herstellen eines geformten 3-D förmigen Materials nach einem der Ansprüche 1 - 18, **gekennzeichnet durch**:
a. Pressen einer auf Wasser basierenden Zellstoffaufschlämmung zwischen einer ersten männlichen metallischen Formhälfte (5), die sprühbeschichtet oder Guss mit elastomerem Material (6) ist, und einer zweiten weiblichen metallischen Formhälfte (3), und Trocknen der Zellstoffaufschlämmung bei erhöhter Temperatur unter Druck, um eine gebogene geformte Zellstoffhülle (17) zu bilden,
b. Bereitstellen einer Kernabstandshalterstruktur und Verkleben der verstärkenden Abstandshalterstruktur (18) mit dem Inneren der geformten gebogenen Zellstoffhülle (17).
c. Bereitstellen einer inneren Hülle, die aus geformtem Zellstoff oder einem anderen flexiblen auf Papier basierenden Material hergestellt ist, und Kleben dieser auf die Kernabstandshal terstruktur.

18. Verfahren nach Anspruch 17, **gekennzeichnet dadurch, dass** das Pressen in einem Rahmen (1) erfolgt, in dem eine der Formhälften (5) befestigt ist als Mittel zur translatorischen Bewegung in Richtung der anderen Formhälfte, Mittel zum Komprimieren und Halten des Paares (3, 5) Formhälften, die aneinander angepasst sind, und einem Bad (10) aus Zellstoffaufschlämmung, und dadurch, dass das Mittel zur translatorischen Bewegung angepasst ist zum Eintauchen einer ersten Formhälfte in das Bad aus Zellstoffaufschlämmung und Bewegen der ersten Formhälfte in passende Komprimierung entgegen der zweiten Formhälfte.

19. Verfahren nach Anspruch 17 oder 18, **gekennzeichnet dadurch, dass** das Pressen in einem Rahmen (1) erfolgt, in dem eine der Formhälften (5) befestigt ist als Mittel zur translatorischen Bewegung in Richtung der anderen Formhälfte, Mittel zum Komprimieren und Halten des Paares (3, 5) Formhälften, die aneinander angepasst sind, und einem Bad (10) aus Zellstoffaufschlämmung, und dadurch, dass das Mittel zur translatorischen Bewegung angepasst ist zum Eintauchen einer ersten Formhälfte in das Bad aus Zellstoffaufschlämmung und Bewegen der ersten Formhälfte in passende Komprimierung entgegen der zweiten Formhälfte.

## Revendications

1. Un grand matériau incurvé tridimensionnel léger comprenant :
une coque extérieure (17) de pâte en suspension moulée et une entretoise de renforcement (18) flexible se conformant à l'intérieur de ladite coque et adhérant à celle-ci, et une coque intérieure faite de pâte moulée ou d'un matériau à base de papier flexible adhérant à ladite doublure formant entretoise.

2. Matériau selon la revendication 1, **caractérisé en ce que** ladite entretoise est une feuille alvéolée de cellules hexagonales.

3. Matériau selon la revendication 1, **caractérisé en ce que** ladite doublure formant entretoise de renforcement comprend des alvéoles creuses séparées par des parois sensiblement perpendiculaires à ladite coque.

4. Matériau selon la revendication 1, **caractérisé en ce que** ladite entretoise de renforcement comprend une structure en nid d'abeille faite en papier.

5. Matériau selon la revendication 1, **caractérisé en ce que** ladite entretoise de renforcement est constituée d'une structure formant entretoise en pâte moulée.

6. Matériau selon la revendication 1, **caractérisé en ce que** lesdites pièces faites en pâte moulée ont été réalisées avec des additifs fonctionnels tels que des ignifugeants, des additifs d'hydrophobisation, des additifs de résistance à l'état sec et / ou des additifs de résistance à l'état humide.

7. Matériau selon la revendication 1 **caractérisé par** un couvercle comprenant également une coque externe en pâte moulée et une doublure formant entretoise de renforcement.

8. Matériau selon l'une quelconque des revendications précédentes, dans lequel le matériau a une longueur d'au moins 1 m.

9. Matériau selon la revendication 1 **caractérisé en ce qu'**il est un gros objet tridimensionnel léger.

10. Matériau selon la revendication 9, **caractérisé en ce que** ladite entretoise flexible de renforcement est une feuille alvéolée à alvéoles hexagonales.

11. Matériau selon la revendication 9, **caractérisé en ce que** ladite entretoise flexible de renforcement est une structure formant noyau ondulée.

12. Matériau selon la revendication 9, **caractérisé en ce que** ladite doublure formant entretoise de renforcement comprend des alvéoles creuses séparées par des parois sensiblement perpendiculaires à ladite coque.

13. Matériau selon la revendication 9, **caractérisé en ce que** ladite entretoise flexible de renforcement comprend une structure en nid d'abeille faite en papier.

14. Matériau selon la revendication 9, **caractérisé en ce que** ladite entretoise flexible de renforcement est constituée d'une structure formant entretoise faite en pâte moulée.

15. Matériau selon la revendication 9, **caractérisé en ce que** lesdites pièces faites en pâte moulée ont été réalisées avec des additifs fonctionnels tels que des ignifugeants, des additifs d'hydrophobisation, des additifs de résistance à l'état sec et / ou des additifs de résistance à l'état humide.

16. Matériau selon l'une quelconque des revendications 9 à 15, dans lequel l'objet a une longueur d'au moins 1 m.

17. Procédé de fabrication d'un matériau moulé en 3D selon l'une quelconque des revendications 1 à 18, **caractérisé par** :
a. le fait de presser une suspension de pâte à base d'eau entre une première moitié de moule métallique mâle (5) enduite par pulvérisation ou coulée avec un matériau élastomère (6) et une deuxième moitié de moule métallique femelle (3), et de sécher la suspension de pâte à une température élevée sous pression, pour former une coque de pâte moulée incurvée (17),
b. le fait de fournir une structure formant entretoise de noyau et coller ladite structure (18) formant entretoise de renforcement à l'intérieur de ladite coque de pâte incurvée moulée (17).
c. le fait de prévoir une coque intérieure en pâte moulée ou autre matériau flexible à base de papier et de la coller sur la structure formant entretoise de noyau.

18. Procédé selon la revendication 17, **caractérisé en ce que** ledit fait de presser s'effectue dans un bâti (1) dans lequel l'une desdites moitiés de moule (5) est montée dans des moyens de déplacement en translation vers l'autre moitié de moule, des moyens pour compresser et maintenir ladite paire (3, 5) de moitiés de moule ajustées l'une contre l'autre, et un bain (10) de suspension de pâte, et **en ce que** lesdits moyens de déplacement en translation sont adaptés pour immerger une première moitié de moule dans ledit bain de suspension de pâte et pour déplacer ladite première moitié de moule jusqu'à compression ajustée contre ladite deuxième moitié de moule.

19. Procédé selon la revendication 17 ou la revendication 18, **caractérisé en ce que** ledit fait de presser s'effectue dans un bâti (1) dans lequel l'une desdites moitiés de moule (5) est montée dans des moyens de déplacement en translation vers l'autre moitié de moule, des moyens pour compresser et maintenir ladite paire (3, 5) de moitiés de moule ajustées l'une contre l'autre, et un bain (10) de suspension de pâte, et **en ce que** lesdits moyens de déplacement en translation sont adaptés pour immerger une première moitié de moule dans ledit bain de suspension de pâte et déplacer ladite première moitié de moule jusqu'à une compression ajustée contre ladite deuxième moitié de moule.
